# EUROPÄISCHE PATENTSCHRIFT

(11) **EP 0 848 909 B1**
(45) Veröffentlichungstag und Bekanntmachung des Hinweises auf die Patenterteilung: **12.11.2003**
(21) Anmeldenummer: 97710020.5
(22) Anmeldetag: 01.10.1997
(51) Int. Cl.: A21D 8/02, A21D 6/00, A21D 8/00, A21D 13/00

(54) **Verfahren zur Herstellung eines Nahrungsmittels mit unterschiedllichem Teigvolumen und danach hergestelltes Nahrungsmittel**
Method for production of a food product having variable dough volume and the food product produced thereby
Procédé de préparation d'un produit alimentaire à volumes de pâte différents, et produit alimentaire ainsi obtenu

(30) Priorität: 23.10.1996 DE 19643712
(43) Veröffentlichungstag der Anmeldung: 24.06.1998
(73) Patentinhaber: Dr. AUGUST OETKER NAHRUNGSMITTEL KG, 33617 Bielefeld (DE)
(72) Erfinder: Mickisch, Oliver, 33617 Bielefeld (DE); Pisch, Torsten, 33719 Bielefeld (DE); Fast, Lothar, 33611 Bielefeld (DE); Litzke, Michael, 33605 Bielefeld (DE)
(74) Vertreter: Meyer, Gerd

(56) Entgegenhaltungen:
- EP-A- 0 105 582
- WO-A-91/08671
- DE-A- 4 209 694
- GB-A- 2 302 256
- US-A- 3 876 815
- US-A- 4 170 659
- US-A- 4 551 337
- US-A- 4 725 444
- US-A- 5 238 693

## Beschreibung

Im nachstehenden wird ein völlig neuartiges Nahrungsmittel beschrieben bzw. dessen Herstellung.

Aufgabe der vorliegenden Erfindung ist es, ein Nahrungsmittel herzustellen, bei dem die Knusprigkeit und der Geschmack eines Gebäcks mit Oberflächenbehandlung zum Beispiel einer Brezel oder eines auf Laugenteigbasis hergestellten Gebäcks mit der einer belegten Teigware bzw. Backware vorzugsweise vom Typ Pizza verbunden wird.

Es sind zwar bereits mit Käse, Schinken und ähnlichen Produkten belegte Backwaren auf den Markt. Diese weisen jedoch den Nachteil auf, daß sie wegen ihres Teigvolumens nicht knusprig sind. Diese Nachteile werden durch die vorliegende Erfindung beseitigt.

In der US-A-4 170 659 wird eine Pizza beschrieben, welche eine knusprige Kruste aufweist, und bei der der Belag auf einen Blasen enthaltenden Teig aufgebrecht wird.

Die Lösung der vorstehenden Aufgabe wird durch die Merkmale der kennzeichnenden Teile der Ansprüche 1 und 5 möglich. Die übrigen Ansprüche stellen Weiterentwicklungen des erfindungsgemäßen Gegenstandes bzw. Verfahrens dar.

Der Grundteig der erfindungsgemäßen Backware ist vorzugsweise ein Hefeteig. Dieser wird nach dem Teigkneten und der Vorgärung zu einem Teigstrang beliebiger Konsistenz ausgewalzt. Sodann erfolgt die äußere Formgebung des Produkts durch Ausstechen, Formen oder dergleichen, wobei zu einem beliebigen Zeitpunkt, vorzugsweise vorher, Vertiefungen vorbestimmter Anzahl und Tiefe in diesen Teigrohling zum Beispiel durch Pressen eingebracht werden, wodurch eine Oberfläche unterschiedlicher Struktur entsteht. Um ein Aufblähen der Vertiefungen des Teigrohlings zu verhindern, werden diese Vertiefungen gestipfelt. Nach dieser Maßnahme wird ein Oberflächenbehandlungsmittel zum Beispiel im Laugenbad auf die Rohware aufgebracht. Für eine vorherbestimmte Zeitspanne von ungefähr 1 1/2 bis 8 Minuten wird nun der Teigling einer variierenden höheren Temperatur von ungefähr 180 °C bis 300 °C und feuchter Luft ausgesetzt. Danach erfolgt das Einfüllen der flüssigen, cremigen oder pastösen Zubereitung in die vorhandenen Vertiefungen. Nach dem Abkühlen des Teiglings erfolgt dessen Endbelegung, woran sich dann ein evtl. Fertigbacken bzw. Tiefkühlen anschließt.

Das Einfüllen der flüssigen, cremigen oder pastösen Zubereitung in die Vertiefungen kann durchaus auch schon dann vorgenommen werden, wenn der Teigling noch keiner höheren Temperatur und keiner feuchter Luft ausgesetzt worden ist.

Desweiteren kann nach der Vorgärung und der Auswalzung des Teigstrangs eine Gärung vorgenommen werden. In einer weiteren Ausbildungsform des Erfindungsgedanken kann das Laugenbad, in dem das Oberflächenbehandlungsmittel aufgebracht wird, beheizt werden.

Das erfindungsgemäße Nahrungsmittel zeichnet sich dadurch aus, daß es in verschiedenen Zonen eingeteilt ist, wobei sich Zonen mit höherem und Zonen mit niedrigerem Teigvolumens ablösen. Es ist darauf zu achten, daß das erfindungsgemäße Nahrungsmittel mindestens eine Zone mit niedrigem Teigvolumen aufweist. Das Aufbringen des Oberflächenbehandlungsmittels kann in Form von Tauchen oder Sprühen erfolgen, wobei das Oberflächenbehandlungsmittel dazu geeignet sein muß, der Oberfläche eine besonders knusprige Struktur zu verleihen.

## Patentansprüche

1. Verfahren zur Herstellung eines Nahrungsmittels mit unterschiedlichem Teigvolumen, **dadurch gekennzeichnet, daß** nach dem Teigkneten und der Vorgärung
a) ein Teigstrang beliebiger Konsistenz ausgewalzt wird,
b) Vertiefungen vorbestimmter Anzahl und Tiefe in diesen Teigrohling zum Beispiel durch Pressen eingebracht werden, so daß eine Oberfläche unterschiedlicher Struktur entsteht,
c) die äußere Formgebung des Produkts erfolgt,
d) ein Stipfeln der Vertiefungen des Teigrohlings erfolgt,
e) ein Oberflächenbehandlungsmittel zum Beispiel im Laugenbad auf die Rohware aufgebracht wird,
f) für eine vorherbestimmte Zeitspanne, vorzugsweise 1 1/2 bis 8 Minuten, der Teigling einer variierenden höheren Temperatur, vorzugsweise 180 °C bis 300 °C, und feuchter Luft ausgesetzt wird,
g) eine flüssige, cremige oder pastöse Zubereitung in die gemäß d) entstandenen Vertiefungen eingebracht wird,
h) nach dem Abkühlen die Endbelegung des Teiglings sowie evtl. das Fertigbacken bzw. Tiefkühlen erfolgt.

2. Verfahren zur Herstellung eines Nahrungsmittels mit unterschiedlichem Teigvolumen nach Anspruch 1., **dadurch gekennzeichnet, daß** zwischen den Schritten e) und f) eine flüssige, cremige oder pastöse Zubereitung in die Vertiefungen des Teigrohlings eingebracht wird.

3. Verfahren zur Herstellung eines Nahrungsmittels mit unterschiedlichem Teigvolumen nach den vorhergehenden Ansprüchen, **dadurch gekennzeichnet, daß** zwischen Schritt b) und c) eine nochmalige Gärung erfolgt.

4. Verfahren zur Herstellung eines Nahrungsmittels mit unterschiedlichem Teigvolumen nach den vorhergehenden Ansprüchen, **dadurch gekennzeichnet, daß** das in Anspruch 1 e) erwähnte Laugenbad beheizt wird.

5. Nach dem beanspruchten Verfahren herstellbares Nahrungsmittel, **dadurch gekennzeichnet, daß** es in verschiedenen Zonen eingeteilt ist, wobei sich Zonen mit höherem mit Zonen geringerem Teigvolumen ablöst.

6. Nach dem beanspruchten Verfahren herstellbares Nahrungsmittel nach Anspruch 5., **dadurch gekennzeichnet, daß** das erfindungsgemäße Nahrungsmittel mindestens eine Zone mit niedrigem Teigvolumen aufweist.

7. Nach dem beschriebenen Verfahren herstellbares Nahrungsmittel nach den Ansprüchen 4. und 6., **dadurch gekennzeichnet, daß** ein Oberflächenbehandlungsmittel in Form von Tauchen oder Sprühen aufgebracht wird.

8. Nach dem beanspruchten Verfahren herstellbares Nahrungsmittel nach den Ansprüchen 4., 5. und 7., **dadurch gekennzeichnet, daß** das Oberflächenbehandlungsmittel dazu geeignet ist, der Oberfläche eine besondere knusprige Struktur zu verleihen.

## Claims

1. Method of producing a foodstuff with a differential dough volume, **characterised in that** after the dough kneading and the prefermentation:
a) a dough strand of desired consistency is rolled out,
b) depressions in predetermined number and depth are formed in this dough blank by, for example, pressing, so that a surface of differential structuring arises,
c) the outer shaping of the product is carried out,
d) a stippling of the depressions of the dough blank is carried out,
e) a surface treatment medium, for example in a savoury solution bath, is applied to the raw product,
f) the piece of dough is exposed to a varying elevated temperature, preferably 180° C to 300° C, and moist air for a predetermined period of time, preferably 1.5 to 8 minutes,
g) a liquid, creamy or pasty preparation is introduced into the depressions created according to d) and,
h) after cooling, the final coating of the piece of dough as well as possibly final baking or deep-freezing is carried out.

2. Method of producing a foodstuff with differential dough volume according to claim 1, **characterised in that** a liquid, creamy or pasty preparation is introduced into the depressions of the dough blank between the steps e) and f).

3. Method of producing a foodstuff with differential dough volume according to the preceding claims, **characterised in that** a repeated fermentation is carried out between step b) and c).

4. Method of producing a foodstuff with differential dough volume according to the preceding claims, **characterised in that** the savoury solution bath stated in claim 1 e) is heated.

5. Foodstuff producible by the claimed method, **characterised in that** it is divided into various zones, wherein zones with higher dough volume separate zones with lower dough volume.

6. Foodstuff according to claim 5 and producible according to the claimed method, **characterised in that** the foodstuff according to the invention has at least one zone with a low dough volume.

7. Foodstuff according to claims 4 and 6 and producible according to the described method, **characterised in that** a surface treatment medium is applied in the form of dipping or spraying.

8. Foodstuff according to claims 4, 5 and 7 and producible according to the claimed method, **characterised in that** the surface treatment medium is suitable for the purpose of imparting to the surface a particularly crispy structure.

## Revendications

1. Procédé de préparation d'un produit alimentaire à volumes de pâte différents, **caractérisé en ce que**, après le pétrissage de la pâte et la pré-fermentation,
a) on roule un cordon de pâte de consistance quelconque,
b) on pratique dans ce pâton des dépressions d'une profondeur et dans un nombre prédéterminés, par exemple par pressage, de sorte qu'on obtient une surface de structure différente,
c) on effectue la mise en forme extérieure du produit,
d) on pique les dépressions du pâton,
e) on épand un agent de traitement de surface sur le produit brut, par exemple dans un bain de saumure,
f) on expose le pâton pendant une durée prédéterminée, de préférence 1,5 à 8 minutas, à une température plus élevée que l'on fait varier, de préférence 180°C à 300°C, et à de l'air humide,
g) on introduit une préparation liquide, crémeuse ou pâteuse dans les dépressions obtenues selon d),
h) après refroidissement, on effectue le garnissage final du pâton ainsi qu'éventuellement sa cuisson définitive ou sa surgélation.

2. Procédé de préparation d'un produit alimentaire à volumes de pâte différents selon la revendication 1, **caractérisé en ce qu'**on introduit une préparation liquide, crémeuse ou pâteuse dans les dépressions du pâton entre les étapes e) et f)

3. Procédé de préparation d'un produit alimentaire à volumes de pâte différents selon les revendications précédentes, **caractérisé en ce qu'**on effectue une fermentation supplémentaire entre les étapes b) et c).

4. Procédé de préparation d'un produit alimentaire à volumes de pâte différents selon les revendications précédentes, **caractérisé en ce qu'**on chauffe le bain de saumure mentionné à l'étape e) de la revendication 1.

5. Produit alimentaire pouvant être obtenu d'après le procédé revendiqué, **caractérisé en ce qu'**il est divisé en différentes zones, des zones de plus grand volume de pâte et des zones de plus petit volume de pâte se succédant.

6. Produit alimentaire pouvant être obtenu d'après le procédé revendiqué selon la revendication 5, **caractérisé en ce que** le produit alimentaire selon l'invention présente au moins une zone de faible volume de pâte.

7. Produit alimentaire pouvant être obtenu d'après le procédé revendiqué selon les revendications 4 et 6, **caractérisé en ce qu'**on épand un agent de traitement de surface par immersion ou pulvérisation.

8. Produit alimentaire pouvant être obtenu d'après le procédé revendiqué selon les revendications 4, 5 et 7, **caractérisé en ce que** l'agent de traitement de surface est apte à conférer à la surface une structure particulièrement croustillante.
